# EUROPÄISCHE PATENTSCHRIFT

(11) **EP 3 717 171 B1**
(45) Veröffentlichungstag und Bekanntmachung des Hinweises auf die Patenterteilung: **07.08.2024**
(21) Anmeldenummer: 18814771.4
(22) Anmeldetag: 14.11.2018
(51) Int. Cl.: B23K 20/12

(54) **VORRICHTUNG UND VERFAHREN ZUM NAHEZU VERZÖGERUNGSFREIEN ÄNDERN DER SCHWEISSRICHTUNG DER SCHWEISSSCHULTER EINER ANLAGE ZUM RÜHRREIBSCHWEISSEN**
DEVICE AND METHOD FOR CHANGING THE WELDING DIRECTION OF THE WELDING SHOULDER OF A SYSTEM FOR A FRICTION STIR WELDING PROCESS WITHOUT DELAY
DISPOSITIF ET PROCÉDÉ POUR CHANGER PRESQUE INSTANTANÉMENT LA DIRECTION DE SOUDAGE DE L'ÉPAULEMENT DE SOUDAGE D'UNE INSTALLATION DE SOUDAGE PAR FRICTION-MALAXAGE

(30) Priorität: 27.11.2017 DE 102017010965
(43) Veröffentlichungstag der Anmeldung: 07.10.2020
(73) Patentinhaber: Grenzebach Maschinenbau GmbH, 86663 Asbach-Bäumenheim (DE)
(72) Erfinder: WEIGL, Markus, 86609 Donauwörth (DE)
(74) Vertreter: Page, White & Farrer Germany LLP
(86) Internationale Anmeldenummer: PCT/DE2018/000334
(87) Internationale Veröffentlichungsnummer: WO 2019/101253

(56) Entgegenhaltungen:
- CN-A- 105 598 575
- CN-A- 105 834 576
- DE-T2- 602005 003 184
- DE-U1- 202014 003 072
- DE-U1- 202015 000 949
- US-A1- 2003 209 586
- US-A1- 2010 199 742

## Beschreibung

Die Anmeldung betrifft eine Anlage zum Rührreibschweißen mit einer Vorrichtung zum nahezu verzögerungsfreien Ändern der Schweißrichtung der Schweißschulter, wenn die geometrische Anordnung der zu verschweißenden Fügepartner oder Materialunebenheiten dies erfordern, sowie ein zugehöriges Verfahren.

Das Reibrührschweißen oder "Friction Stir Welding" (FSW) wird bekanntlich zunehmend in der Luft- und Rumfahrttechnik, in der Schienenverkehrstechnik sowie im Automobilbau eingesetzt. Dieses einfache, saubere und innovative Fügeverfahren zeichnet sich durch sein hohes Automatisierungspotential sowie den Wegfall des Erfordernisses von Nieten aus, wodurch die Herstellungskosten gesenkt werden und das Gewicht daraus hergestellter Strukturen reduziert wird.

Zum Stand der Technik wird das Dokument DE 10 2014 004 331 B3, das auf die Anmelderin zurückgeht genannt. Dieses Dokument betrifft ein Verfahren und eine Vorrichtung zur Erhöhung der Qualität der Schweißnaht beim Rührreibschweißen sowie ein Computerprogramm und einen maschinenlesbaren Träger mit einem Programmcode zur Durchführung des Verfahrens.

Aus der den Oberbegriff des Patentanspruchs 1 bildenden Druckschrift US 2003/0209586 A1 ist eine Anlage zum Rührreibschweißen mit einem Grundkörper bekannt, der einen Schweißtisch und einen Brückenträger zur Aufhängung eines Reibschweißkopfes aufweist, wobei der Reibschweißkopf horizontal und vertikal den gesamten Bereich des Schweißtisches stufenlos überfahren kann.

Aus der Druckschrift US 2010/0199742 A1 ist ferner eine Anlage und ein Verfahren zum inkrementellen Verformen eines Werkstücks bekannt, wobei die an entgegengesetzten Oberflächen des Werkzeugs angeordneten Manipulatoren Formwerkzeuge derart bewegt werden, dass sich eine gewünschte Verformung des Werkstücks ergibt.

Die Druckschriften CN 105 598 575 A und CN 105 834 576 A offenbaren einen Rührreibkopf für ein Rührreibschweißverfahren, wobei eine Schweißpin-Spitze innerhalb einer über Stellelemente einstellbaren Schweißschulter angeordnet ist.

Aus der Druckschrift DE 20 2015 000 949 U1 ist eine Vorrichtung zum mobilen Rührreibschweißen von rohrartigen Strukturen bekannt, wobei der Spindelkopf in einer Orbitalbewegung um die rohrartigen Strukturen bewegt wird und die Schweißschulter eine an die Wölbung der Fügepartner angepasste Gleitfläche aufweist.

Die Druckschrift DE 20 2014 003072 U1 offenbart eine Vorrichtung zur Erfassung der mechanischen Kräfte an der Schweißpin-Spitze bei einem Vorgang des Rührreibschweißens, wobei Sensoren zur Bestimmung von Kraft, Druck oder Weg an der Werkzeugglocke und zur Erfassung der Axialkraft, des Drehmoments und des Biegemoments an dem Schweißpin-Stift angebracht sind.

Schließlich zeigt die Druckschrift DE 60 2005 003 184 T2 eine Vorrichtung und ein Verfahren zum Rührreibschweißen, wobei eine Prüfeinrichtung mittels einer CCD-Kamera die Arbeitsqualität eines hergestellten Schweißabschnitts überprüft.

Bei vielen Schweißprozessen ist es nötig während des Schweißvorgangs den Anstellwinkel des, den Schweißstift führenden, Schweißschuhs, bzw. der Schweißschulter, entsprechend den Anforderungen die die jeweiligen Fügepartner stellen, rasch und präzise zu ändern.

Eine rasche und präzise Änderung des Anstellwinkels der Schweißschulter ist mit den herkömmlichen Anlagen und Verfahren jedoch nicht möglich.

Der Erfindung liegt daher die Aufgabe zugrunde, eine Anlage und ein Verfahren zum Rührreibschweißen zu schaffen, wobei ein nahezu verzögerungsfreies Ändern der Schweißrichtung der Schweißschulter einfach und kostengünstig ermöglicht ist. Erfindungsgemäß wird diese Aufgabe hinsichtlich der Anlage durch die Merkmale des neuen Patentanspruchs 1 und hinsichtlich des Verfahrens durch die Maßnahmen des neuen Patentanspruchs 8 gelöst.

In den weiteren Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen im Einzelnen:
Fig.1: eine perspektivische Gesamtansicht der erfindungsgemäßen Anlage;
Fig. 2: eine perspektivische Darstellung des erfindungsgemäßen Reibschweißkopfes;
Fig. 3: eine Seitenansicht und eine Draufsicht von unten auf die Pin - Aufnahme zur Halterung des Schweißpins;
Fig. 4: eine nähere Ansicht der Pin - Aufnahme zur Halterung des Schweißpins; und
Fig. 5: einen adaptiven Dichtungsring 36 im Bereich der Schweißschulter 17.

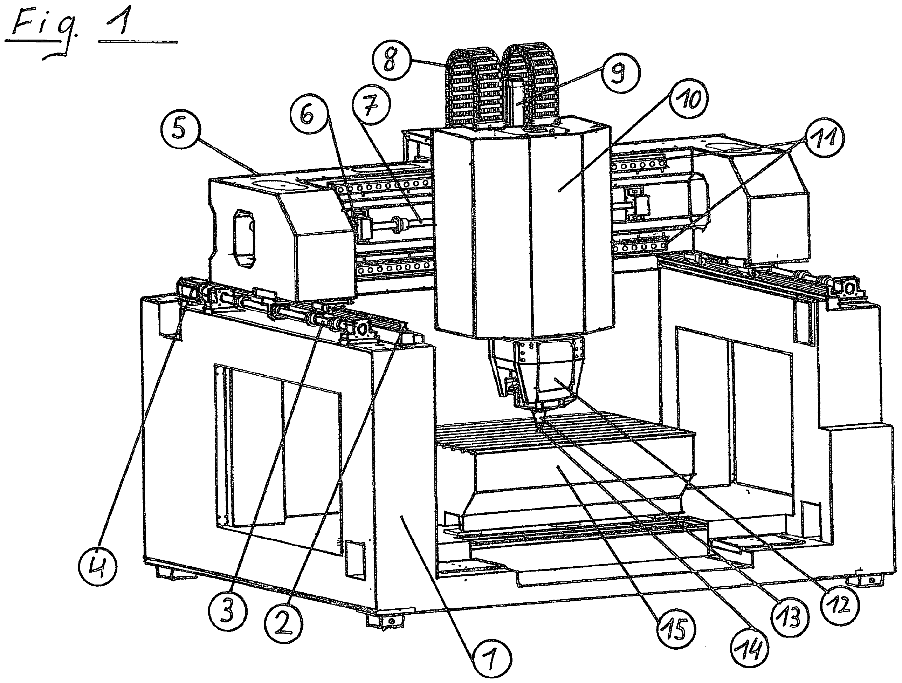

Die Fig.1 zeigt eine perspektivische Gesamtansicht der erfindungsgemäßen Anlage.
a) ein Grundkörper (1) mit einem horizontal verfahrbaren Brückenträger (5) weist einen, mit diesem, vertikal verstellbaren Reibschweißkopf (12) auf, der eine Pin - Aufnahme (13) zur Halterung und den Antrieb einer Schweißpin - Spitze (14) trägt, wobei eine Schweißschulter (18) eine mehrfach gelagerte Schweißschulter - Aufnahme (17) aufweist,
b) die Schweißschulter - Aufnahme (17) lässt sich mittels verschiedener Zug - und Druckstangen (16) während des Schweißvorgangs in beliebigem Anstellwinkel zu den Fügepartnern verstellen.
   Beansprucht wird im Verfahren außerdem, dass die Zug - und Schubstangen (16) Piezo - Feinregulierungs Einrichtungen (22) aufweisen.

Die Erfindung wird im Folgenden näher beschrieben.

Es zeigen im Einzelnen:
Fig.1: eine perspektivische Gesamtansicht der erfindungsgemäßen Vorrichtung

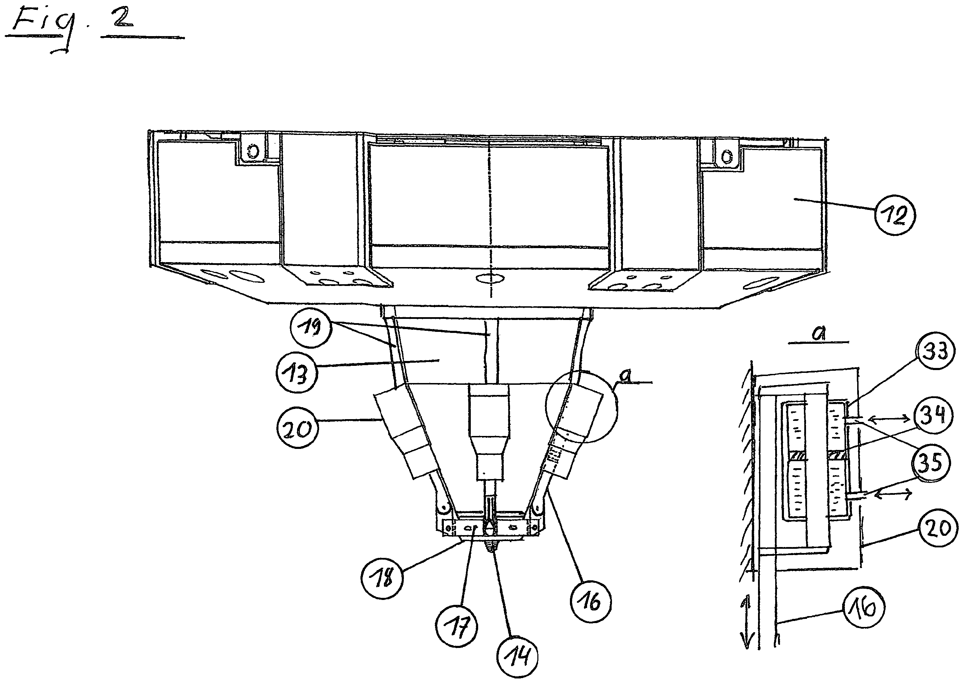

Fig.2 : eine perspektivische Darstellung des erfindungsgemäßen Reibschweißkopfes

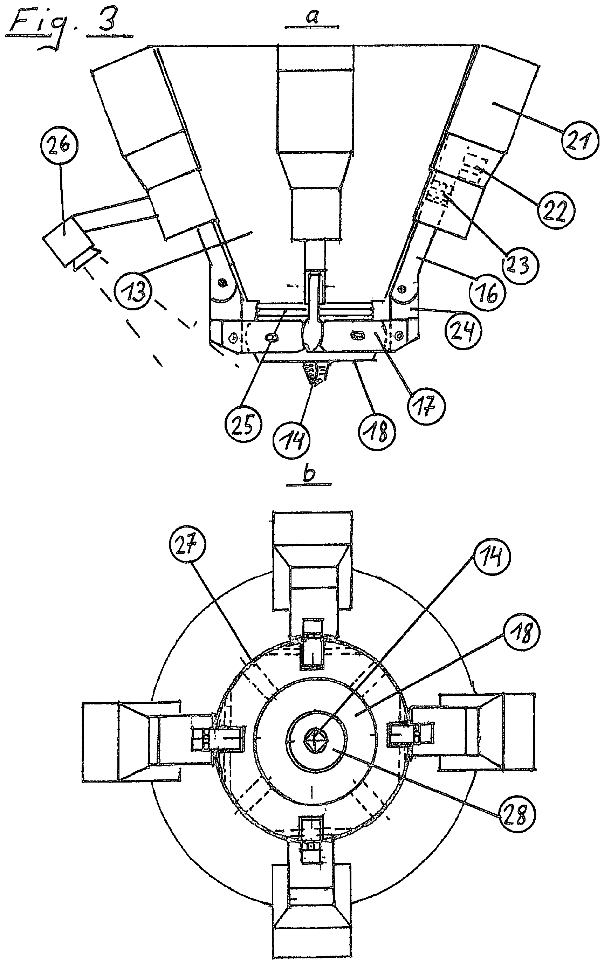

Fig.3; eine Seitenansicht und eine Draufsicht von unten auf die Pin - Aufnahme zur Halterung des Schweißpins

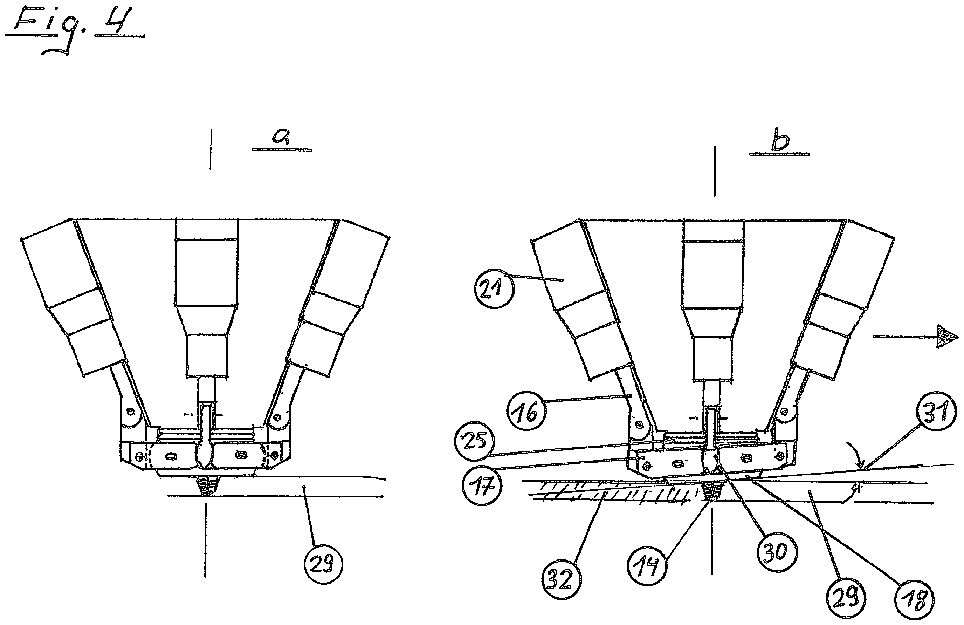

Fig.4**:** eine nähere Ansicht der Pin - Aufnahme zur Halterung des Schweißpins

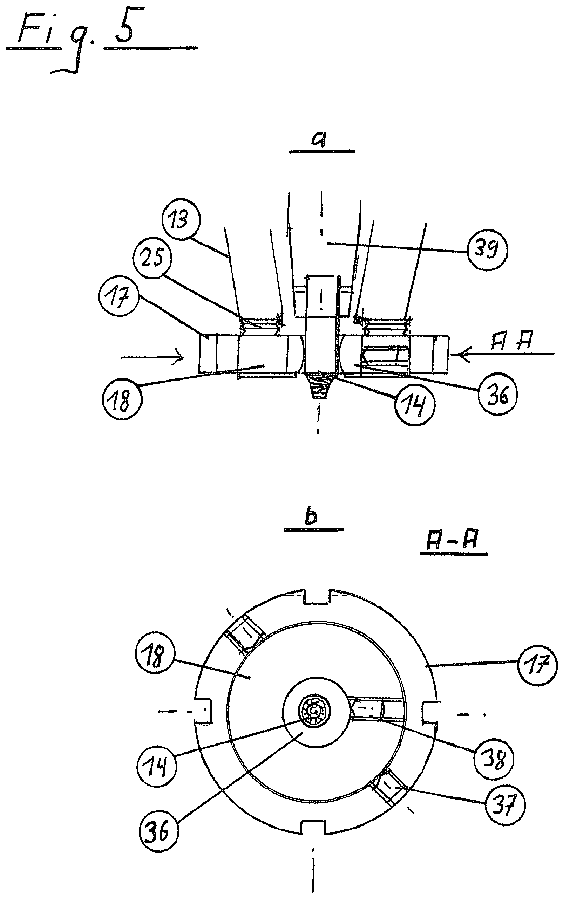

Fig.5: einen adaptiven Dichtungsring 36 im Bereich der Schweißschulter 17

Die Fig.1 zeigt eine perspektivische Gesamtansicht der erfindungsgemäßen Vorrichtung.

Der Grundkörper 1 der erfindungsgemäßen Portalschweißvorrichtung weist an der Oberseite zur Bewegung eines, die Aufhängung 10 eines Reibschweißkopfs 12 tragenden Brückenträgers 5, auf beiden Seiten des Brückenträgers 5 jeweils eine Längsführungs - Schiene 2 auf. Parallel zu der jeweiligen Längsführungs - Schiene 2 wird jeweils mittels einer Antriebs - und Verstellspindel 3 für die Längsverstellung des Brückenträgers 5 die Aufhängung 10 durch einen Antrieb 4 bewegt.

Für die Querbewegung der Aufhängung 10 des Reibschweißkopfs 12 dient der Antrieb 6 der diese Bewegung mittels einer Antriebs - und Verstellspindel 7 über die gezeigten Schienen 11 umsetzt. Versorgungs - und Steuerleitungen 8 für den Betrieb der Portalschweißvorrichtung führen in die Aufhängung 10 und deren Vertikal - Verstellvorrichtung 9.Die Aufhängung 10 trägt eine Pin - Aufnahme 13 zur Halterung eines Schweißpins mit einer Schweißpin -Spitze 14.

Ein Schweißtisch 15 dient zur Auflage und/ oder Befestigung der zu verschweißenden Fügepartner.

Die Fig.2 zeigt eine perspektivische Darstellung des erfindungsgemäßen Reibschweißkopfes.

Unterhalb des Reibschweißkopfs 12 befindet sich die Pin - Aufnahme 13 zur Halterung und Steuerung des Schweißpins.

Die Schweiß - Schulter 18, mit der Schweißpin - Spitze 14 wird mittels einer scheibenförmigen Platte die als eine Schweißschulter - Aufnahme 17 mit einer kardanischen Aufhängung dient, durch mehrere Stelleinheiten 20 nahezu ohne Verzögerung präzise gesteuert. Diese Schweißschulter - Aufnahme 17 ermöglicht im Gegensatz zu der Anordnung einer konventionellen Zylinderbohrung zur Lagerung des sich drehenden Reibstifts eine Nickbewegung in jeder Raumrichtung. Während in der einfachsten Ausbaustufe der Schweißschulter - Aufnahme 17 eine solche Nickbewegung lediglich in der Richtung des Vorschubs möglich ist, also gewissermaßen sich während des Schweißvorgangs ein schleppender Anstellwinkel einstellt, zeigt die Fia.2 eine weitere Ausbaustufe. In dieser weiteren Ausbaustufe der Schweißschulter-Aufnahme 17 kann die Fassung der scheibenförmigen Schulter sich in jede Raumrichtung neigen, also gewissermaßen eine taumelnde Bewegung ausführen. Die entsprechende Kraftübertragung auf die Schweiß - Schulter 18 erfolgt mittels vier, im Winkel von 90 Grad zueinander angeordneten, Zug - und Schubstangen 16. Nähere Einzelheiten sind der Fig.3 zu entnehmen. Diese Bauform ist lediglich beispielhaft. So kann das Zusammenspiel der gezeigten Zug - und Schubstangen 16 mittels weiterer Zug - und Schubstangen 16, symmetrisch im Kreis angeordnet, ergänzt werden. Jedoch ist die Lagerung der scheibenförmigen Schulter nicht zwingend rotations - symmetrisch, da jede Schweißverbindung an die Beweglichkeit der Nickbewegungen des drehenden Reibstifts andere Anforderungen stellt. Insgesamt ermöglicht die erfindungsgemäße Scheibenform der Schweißschulter - Aufnahme 17 eine geringere Reibung und glattere Flächen der Schweißnaht.

Jede Stelleinheit 20 weist Versorgungs - und Steuerleitungen 19 auf.

Die Fig.2a zeigt eine Detail - Darstellung einer Stelleinheit 20.

Im Bereich einer Zug - und Schubstange 16 ist hier jeweils zur Bewegung einer solchen Zug - und Schubstange 16 ein, in zwei gegen einander gerichteten Richtungen bewegbarer, doppelt wirkender Kolben 34 angeordnet der mittels zweier, entsprechend ansteuerbarer, Steuerleitungen 35 in einem Hydraulikzylinder 33 tätig ist. Diese Anordnung ist lediglich beispielhaft. Es können natürlich auch elektrische Antriebe jeder Art Verwendung finden. Als weitere besondere Ausbauform ist für die Erwärmung der Schweiß - Schulter eine gesonderte Heizung vorgesehen.

Die Fig.3 zeigt eine Seitenansicht und eine Draufsicht von unten auf die Pin - Aufnahme zur Halterung des Schweißpins.

In der Fig.3a ist eine Seitenansicht der Pin - Aufnahme 13 zur Halterung des Schweißpins zu sehen. Der jeweilige Haupt - Stellantrieb 21 für die Schubstangenbewegung einer Zug - und Schubstange 16 kann mittels einer Hydraulik - Vorrichtung erfolgen. Die Feinregulierung der Bewegung einer Schubstange 16 wird mittels einer Piezo - Einrichtung 22 gesteuert, wobei ein Druckmess - Sensor 23 für die Registrierung der auftretenden Kräfte dient.

Die, von den vier Zug - und Schubstangen 16 auf vier Seiten mittels jeweils eines Gelenkhebels 24 bewegte Schweißschulter - Aufnahme 17 wird mittels eines, mittig um die Schweißpin - Spitze 14 gelagerten Feder - Packets 25 zentral an die Schweißschulter 18 gedrückt. Aus dem Wechselspiel der einerseits durch das Feder - Packet 25 aufgebrachten Druckkraft und den verschiedenen, von den vier Zug - und Schubstangen 16 aufgebrachten Gegenkräfte resultiert die kardanische Aufhängung der scheibenförmignen Platte der Schweißschulter - Aufnahme 17.

Eine seitwärts an der Pin - Aufnahme 13 dargestellte Kamera 26 steht sinnbildlich für ein, nicht näher bezeichnetes System von Beobachtungs - Elementen einer gefertigten Schweißnaht.

In der Fig.3b ist zentral die Schweißpin - Spitze 14 inmitten der Schweißschulter 18 mit dem Schweißpin 28 zu sehen, wobei die Schweißschulter 18 mittels den gezeigten Madenschrauben 27 befestigt wird. Alternativ ist hier eine dauerhafte Verbindung wie Löten oder Aufschrumpfen möglich.

Die Fig.4: zeigt eine nähere Ansicht des Einsatzes der Pin - Aufnahme zur Halterung des Schweißpins.

In der Fig.4a ist die Halterung während des Schweißvorgangs mit einem gekennzeichneten Fügepartner 29 gezeigt.

In der Fig.4b ist die Pin - Aufnahme (13) im Einsatz während eines Schweißvorgangs bei einer leicht schräg gestellten Schweißschulter - Aufnahme 17 mit der Schweißschulter 18 dargestellt. Auf der linken Seite ist hierbei ein Haupt - Stellantrieb 21 mit seiner zugehörigen Schub - Hubstange 16 in einer ausgefahrenen Stellung gezeigt, die eine leichte Neigung der Schweißschulter - Aufnahme 17 unter der Gegendruckwirkung des Feder - Packets 25 zur Folge hat.. Der resultierende Neigungswinkel, bzw. Verstellwinkel 31 der Schweißschulter zur Oberfläche der Fügepartner darf hierbei maximal 2 bis 5 Grad betragen. In der Regel dürften bis 3 Grad Verstellwinkel 31 ausreichend sein. Der bezeichnete Gelenkhebelkopf 30 des hier sichtbaren Gelenkhebels ist in dieser Ansicht von vorne zu sehen. Die dargestellte Schweißpin - Spitze 14 führt von der gefertigten Schweißnaht 32 gemäß dem nach rechts zeigenden dick ausgeführten Bezugspfeil in den Bereich des Fügepartners 29.

Zur Messung des Verstellwinkels 31 der Schweißschuh - Schulter sind dem Fachmann bekannte Mittel vorgesehen.

Die Fig.5: zeigt einen adaptiven Dichtungsring 36 im Bereich der Schweißschulter - Aufnahme 17.

In der Fig.5a ist in der Mitte der Schweißschulter 18 dieser Dichtungsring 36 mit seinen, der Beweglichkeit der Schweißpin - Spitze 14 dienenden, abgerundeten Flanken zu erkennen. Die Schweißschulter - Aufnahme 17 und das Feder - Packet 25 im Bereich der Pin - Aufnahme 13 umschließen den Werkzeugschaft 39 zur Fassung der Schweißpin - Spitze 14.

In der Fig.5b ist der in der Fig.5a in Richtung des Schnitts A - A gezeigte Querschnitt dargestellt. Die Schweißschulter 18 ist mit jeweils einer der gegenüber liegenden Klemmschrauben 37 an der Aufnahme 17 befestigt, während der adaptive Dichtungsring 36 mit einer Klemmschraube 38 befestigt wird. Alternativ ist hier eine dauerhafte Verbindung wie Löten oder Aufschrumpfen möglich.

Zu einer Steigerung der beim Rührreibschweißen maximal erreichbaren Vorschubgeschwindigkeit werden bevorzugt Hartmetall - Schultern mit einem hohen thermischen Leitwert verwendet. Bevorzugt werden Wolframcarbit-Kobalt Hartmetalle verwendet. Durch die Integration einer Heizung der Schweiß - Schulter wird eine wirkortgerechte Temperierung erreicht, sodass der Reibstift auch bei dynamischer Prozessführung nicht auf kaltes Material trifft, welches übermäßig hohen Schub und damit vorzeitiges Stiftversagen bewirken würde. Durch eine Montage der Schulterheizung zwischen der eigentlichen Schulter und dem zugehörigen Träger ist diese unabhängig vom verschleißenden Werkzeuganteil, wobei kein Wechsel oder ein Umbau erforderlich ist.

Als besondere Ausbauform kann vorgesehen sein, dass der Eintrag und der Austrag von Schweißgut mittels spaltförmigen Anordnungen im Bereich der Schweißpin - Spitze (14) während des Schweißvorgangs möglich ist.

### Bezugszeichenliste

- 1: Grundkörper der Portalschweißvorrichtung
- 2: Längsführungs - Schiene
- 3: Antriebs - und Verstellspindel für die Längsverstellung
- 4: Antrieb der Längsverstellung
- 5: Brückenträger der Portalschweißvorrichtung
- 6: Antrieb für die Querbewegung der Aufhängung 10
- 7: Antriebs - und Verstellspindel für die Querbewegung
- 8: Versorgungs - und Steuerleitungen für den Betrieb
- 9: Vertikal - Verstell - Einrichtung für den Reibschweißkopf
- 10: Aufhängung des Reibschweißkopfs
- 11: Schienen zur Querführung der Portalschweißvorrichtung
- 12: Reibschweißkopf
- 13: Pin - Aufnahme zur Halterung des Schweißpins
- 14: Schweißpin - Spitze
- 15: Schweißtisch
- 16: Zug - und Schubstange der Stelleinheit 20
- 17: Schweßschulter - Aufnahme ( scheibenförmige Platte mit kardanischer Aufhängung )
- 18: Schweiß - Schulter (Statonär - Schulter
- 19: Versorgungs - und Steuerleitung der Stelleinheit 20
- 20: Stelleinheit zur Verstellung der Schweißschulter - Aufnahme - Scheibe 17
- 21: Haupt - Stellantrieb ( z.B.Hydraulik ) für die Schubstangenbewegung einer Zug - und Schubstange 16
- 22: Piezo - Feinregulierungs - Einrichtung einer Schubstange 16
- 23: Druckmess - Sensor
- 24: Gelenkhebel
- 25: Feder - Packet zum Spannungsaufbau an der Aufnahmescheibe 17 (z.B.Tellerfedern )
- 26: Kamera zur Mustererkennung für die Kontrolle der Schweißnaht
- 27: Madenschraube zur Befestigung des Schweißschuhs
- 28: Schweißpin
- 29: Fügepartner
- 30: Gelenkhebelkopf
- 31: Verstellwinkel des Schweißschuhs zur Oberfläche der Fügepartner ( max-5 Grad )
- 32: Schweißnaht
- 33: Hydraulikzylinder
- 34: doppelt wirkender Kolben
- 35: Steuerleitung
- 36: adaptiver Dichtungsring
- 37: Klemmschraube zur Befestigung der Schulter
- 38: Klemmschraube zur Befestigung des Dichtungsrings 36
- 39: Werkzeugschaft zur Fassung der Schweißpin - Spitze 14

## Patentansprüche

1. Anlage zum Rührreibschweißen mit einer Vorrichtung zum nahezu verzögerungsfreien Ändern der Schweißrichtung der Schweißschulter, wenn die geometrische Anordnung der zu verschweißenden Fügepartner oder Materialunebenheiten dies erfordern, mit den folgenden Merkmalen:
a) einem Grundkörper (1) mit einem Schweißtisch (15) und einem Brückenträger (5) zur Aufhängung (10) eines Reibschweißkopfes (12), wobei der Reibschweißkopf (12) horizontal und vertikal den gesamten Bereich des Schweißtisches (15) stufenlos überfahren kann,
**dadurch gekennzeichnet, dass** die Anlage weiter folgende Merkmale aufweist:
b) eine Pin-Aufnahme (13) zur Halterung und den Antrieb einer Schweißpin-Spitze (14) des Reibschweißkopfes (12), wobei die Schweißpin-Spitze (14) innerhalb einer Schweißschulter (18), die relativ zur Pinachse geneigt werden kann, geführt wird;
und
eine Schweißschulter-Aufnahme (17) mit einer kardanischen Aufhängung zum Aufnehmen und Steuern der Schweißschulter (18), wobei
die Schweißschulter-Aufnahme (17) an mehreren, im Winkel gegenüber liegenden Punkten von jeweils einem Haupt-Stellantrieb (21), die jeweils an dem Reibschweißkopf (12) angelenkt sind, mittels jeweils einer Zug- und Schubstange (16) gegen den Druck eines zentral angreifenden Feder-Packets (25) gesteuert wird.

2. Anlage nach Patentanspruch 1,
**dadurch gekennzeichnet, dass**
zumindest eine der Zug- und Schubstangen (16) des jeweiligen Haupt-Stellantriebs (21) eine Piezo-Feinregulierungs-Einrichtung (22) aufweist, wobei mittels eines Druckmess-Sensors (23) die jeweils wirkende Kraft überwacht wird.

3. Anlage nach einem der vorhergehenden Patentansprüche,
**dadurch gekennzeichnet, dass**
das Feder-Packet (25) aus einer Kombination von Federelementen und gesteuerten Piezo-Elementen besteht.

4. Anlage nach einem der vorhergehenden Patentansprüche,
**dadurch gekennzeichnet, dass**
zumindest eine Kamera (26) zum Beobachten einer erzeugten Schweißnaht mit Mitteln zur Mustererkennung vorgesehen ist.

5. Anlage nach einem der vorhergehenden Patentansprüche,
**dadurch gekennzeichnet, dass**
Mittel zur Messung eines Verstellwinkels (31) der Schweißschulter (18) vorgesehen sind.

6. Anlage nach einem der vorhergehenden Patentansprüche,
**dadurch gekennzeichnet, dass**
die Schweißschulter (18) beheizbar ist.

7. Anlage nach einem der vorhergehenden Patentansprüche,
**dadurch gekennzeichnet, dass**
spaltförmige Anordnungen im Bereich der Schweißpin-Spitze (14) vorgesehen sind, die einen Eintrag und Austrag von Schweißgut während des Schweißvorgangs ermöglichen.

8. Verfahren zum Rührreibschweißen mit einer Anlage nach einem der Patentansprüche 1 bis 7,
wobei die Schweißschulter-Aufnahme (17) die Schweißschulter (18) mittels der verschiedenen Zug- und Schubstangen (16) während eines Schweißvorgangs in beliebige Verstellwinkel (31) zu den Fügepartnern verstellt.

9. Verfahren nach Patentanspruch 8,
**dadurch gekennzeichnet, dass**
eine Feinregulierung der Bewegung der Zug- und Schubstangen (16) mittels Piezo-Feinregulierungs-Einrichtungen (22) durchgeführt wird.

## Claims

1. System for friction stir welding with a device for changing the welding direction of the welding shoulder virtually without delay when required by the geometrical arrangement of the parts to be joined by welding or unevennesses of the material, with the following features:
a) a main body (1) with a welding table (15) and a bridge support (5) for the suspension (10) of a friction welding head (12), wherein the friction welding head (12) can steplessly move horizontally and vertically over the entire area of the welding table (15),
**characterized in that** the system has the following features:
b) a pin mount (13) for securing and driving a welding pin tip (14) of the friction welding head (12), wherein the welding pin tip (14) is guided within a welding shoulder (18) which can be inclined in relation to the pin axis; and
a welding shoulder mount (17) with a cardanic suspension for receiving and controlling the welding shoulder (18), wherein
the welding shoulder mount (17) is controlled at multiple points, lying at an angle with respect to one another, by in each case a main adjusting drive (21), respectively articulated on the friction welding head (12), by means of in each case a push and pull rod (16) against the pressure of a centrally acting spring package (25).

2. System according to Claim 1,
**characterized**
**in that** at least one of the push and pull rods (16) of the respective main adjusting drive (21) has a piezo fine regulating device (22), wherein the respectively acting force is monitored by means of a pressure measuring sensor (23).

3. System according to one of the preceding patent claims,
**characterized in that**
the spring package (25) consists of a combination of spring elements and controlled piezo elements.

4. System according to one of the preceding patent claims,
**characterized in that**
at least one camera (26) for observing a weld produced with means for pattern recognition is provided.

5. System according to one of the preceding patent claims,
**characterized in that**
means for measuring an angle of adjustment (31) of the welding shoulder (18) are provided.

6. System according to one of the preceding patent claims,
**characterized in that**
the welding shoulder (18) is heatable.

7. System according to one of the preceding patent claims,
**characterized in that**
gap-shaped arrangements which make an input and output of weld metal possible during the welding operation are provided in the region of the welding pin tip (14).

8. Process for friction stir welding with a system according to one of Claims 1 to 7,
wherein the welding shoulder mount (17) adjusts the welding shoulder (18) to any angles of adjustment (31) in relation to the parts to be joined during a welding operation by means of the various push and pull rods (16) .

9. Process according to Claim 8,
**characterized in that**
a fine regulation of the movement of the push and pull rods (16) is carried out by means of piezo fine regulating devices (22).

## Revendications

1. Installation de soudage par friction malaxage dotée d'un dispositif destiné à modifier presque instantanément la direction de soudage de l'épaulement de soudage si la disposition géométrique des pièces d'assemblage à souder ou si des irrégularités de matériau l'exigent, présentant les caractéristiques suivantes :
a) un corps de base (1) doté d'une table de soudage (15) et d'un support de pont (5) pour la suspension (10) d'une tête de soudage par friction (12), la tête de soudage par friction (12) pouvant se déplacer horizontalement et verticalement en continu sur tout l'espace de la table de soudage (15),
**caractérisée en ce que** l'installation comprend en outre les caractéristiques suivantes :
b) un réceptacle de pion (13) destiné à maintenir et à actionner une pointe de pion de soudage (14) de la tête de soudage par friction (12), la pointe de pion de soudage (14) étant guidée à l'intérieur d'un épaulement de soudage (18) qui peut être incliné par rapport à l'axe du pion ; et
un réceptacle d'épaulement de soudage (17) doté d'une suspension à cardan, et destiné à la réception et à la commande de l'épaulement de soudage (18),
le réceptacle d'épaulement de soudage (17) étant commandé en plusieurs points angulairement opposés par un actionneur principal respectif (21) dont chacun est articulé sur la tête de soudage par friction (12), au moyen respectivement d'une tige de traction et de poussée (16), contre la pression d'un bloc-ressort à action centrale (25).

2. Installation selon la revendication 1, **caractérisée en ce qu'**au moins l'une des tiges de traction et de poussée (16) de l'actionneur principal respectif (21) comprend un piézodispositif de régulation fine (22), la force respectivement exercée étant contrôlée au moyen d'un capteur de mesure de pression (23).

3. Installation selon l'une des revendications précédentes, **caractérisée en ce que** le bloc-ressort (25) est constitué d'une combinaison d'éléments de ressort et de piézoéléments commandés.

4. Installation selon l'une des revendications précédentes, **caractérisée en ce qu'**au moins une caméra (26) est prévue pour observer, au moyen de la reconnaissance de formes, un cordon de soudure généré.

5. Installation selon l'une des revendications précédentes, **caractérisée en ce que** des moyens de mesure d'un angle de réglage (31) de l'épaulement de soudage (18) sont prévus.

6. Installation selon l'une des revendications précédentes, **caractérisée en ce que** l'épaulement de soudage (18) peut être chauffé.

7. Installation selon l'une des revendications précédentes, **caractérisée en ce que** des agencements en forme de fente sont prévus dans la zone de la pointe de pion de soudage (14), lesquels permettent l'entrée et la sortie du métal fondu pendant l'opération de soudage.

8. Procédé de soudage par friction malaxage à l'aide d'une installation selon l'une des revendications 1 à 7, dans lequel le réceptacle d'épaulement de soudage (17) règle, au moyen de diverses tiges de traction et de poussée (16), pendant une opération de soudage, l'épaulement de soudage (18) à n'importe quel angle de réglage (31) par rapport aux pièces d'assemblage.

9. Procédé selon la revendication 8, **caractérisé en ce qu'**une régulation fine du déplacement des tiges de traction et de poussée (16) est réalisée au moyen de piézodispositifs de régulation fine (22).
